Europäisches Patentamt

European Patent Office

Office européen des brevets

(11) Publication number: **0 125 121**
**A2**

(12) **EUROPEAN PATENT APPLICATION**

(21) Application number: **84303029.7**

(22) Date of filing: **04.05.84**

(51) Int. Cl.³: **F 02 M 23/08**
**G 05 D 7/01**

(30) Priority: **06.05.83 GB 8312535**

(43) Date of publication of application:
**14.11.84 Bulletin 84/46**

(84) Designated Contracting States:
**AT BE CH DE FR IT LI LU NL SE**

(71) Applicant: **INTERSALES (EUROPE) LIMITED**
**7 Library Place**
**St. Helier Jersey Channel Islands(GB)**

(72) Inventor: **Pearse, Thomas Geoffrey**
**Old Cleeve 16 Elliston Road**
**Redland Bristol Avon(GB)**

(74) Representative: **Stuart, Ian Alexander et al,**
**MEWBURN ELLIS & CO. 2/3 Cursitor Street**
**London EC4A 1BQ(GB)**

(54) Flow controller.

(57) A flow controller for controlling an auxiliary air supply to an internal combustion engine to produce pulsations leading to better fuel atomisation and cleaner running. An elongate chamber 14 contains three hard balls 56, 58, 60, the central one 58 being lightest and having narrowest flow passage past it. Resulting turbulence causes oscillation of the balls. The ball 56 at the inlet side intermittently closes off the inlet. The ball at the outlet side is urged to deform an O-ring 54 to restrict the outlet, thus reducing the dependence of the flow rate on the engine suction.

Fig 1

## FLOW CONTROLLER

The present invention relates to means for controlling a flow. It is primarily concerned with gas flows, and particularly with providing a pulsating air supply to the manifold of an internal combustion engine to create a fine air/fuel mixture.

Patents GB 1,350,376, US 3,693,650, US 3,799,132 and US 4,024,846 disclose valves for an additional air supply to an engine. Each valve has a body defining a chamber which contains three elastomeric balls. In use, the engine vacuum draws air through the valve body, past the balls. An excessive engine vacuum tends to pull the balls against the end of the housing, whereby they are compressed and laterally expanded. This decreases the air flow passage past them. Thus the effect of variation in the engine vacuum on the air intake is reduced, since an increased vacuum leads to a reduced flow path.

U.S. patent 4,172,438 discloses a similar system, again using three balls of plastics material in a valve housing. However, here the balls differ in hardness. This is intended to enhance the tendency of the balls to oscillate up and down, thus causing pressure waves in the air supply which may improve the combustion of fuel by the engine. For this reason, the middle ball is made hard, the ball nearest the air inlet is said to be semi-hard and the ball nearest the engine is somewhat less hard. The lower part of the valve housing is threadedly engaged to the rest, so that it can be screwed up or down to vary the size of the chamber available for the balls to resonate in. This is so that the oscillation rate can be adapted to the pulsation within the inlet manifold due to the operation of the engine. Generally, the balls will be arranged to resonate at a rate substantially corresponding to a harmonic of the engine pulsation.

However, we have found that the use of deformable balls has disadvantages. For example, it is very difficult to produce such a ball with high accuracy and to ensure that it will retain its shape and size in use. We have found that surprisingly good results can be achieved using hard balls of differing weights.

According to the present invention in a first aspect, there is provided a flow controller comprising a housing defining an elongate chamber with an inlet and outlet at respective end regions; and a plurality of hard balls arranged generally longitudinally within the chamber, the chamber and balls being dimensioned and arranged so as to permit longitudinal flow through the chamber from the inlet to the outlet; and wherein at least a first ball is of a substantially different weight from at least a second ball. Preferably there is a relatively heavy ball on the inlet side of a relatively light ball. Preferably there are three balls of alternating weight, most preferably heavy/light/heavy. There could be a greater number of alternating balls, though this is not at present preferred.

In another aspect the invention provides a flow controller comprising a housing as defined above and a plurality of balls arranged generally longitudinally within the chamber thereof, wherein the dimensions of the balls and the chamber are mutually adapted so that the flow passages past two successive balls are of different ————————————————————————————

-4-

sizes. In one form this is achieved by using balls (preferably three) of equal sizes in a chamber having portions of different cross-sectional areas, preferably comprising a narrow central portion for housing a central ball, and wider inlet and outlet portions for housing inner and outer balls. Of course, balls of different sizes could be used, possibly with a chamber of constant cross-section.

In a third aspect the invention provides a flow controller comprising a housing having a flow passage containing at least one ball and, located at an outlet end portion, a flow restricting means; and the adjacent ball is arranged to be urged by flow through the housing to actuate the flow restricting means. For example the ball may act on a resilient element which is caused thereby to restrict the flow passage to an extent dependent on the force applied by the ball.

The resilient element may be an O-ring on which the ball seats, and which is resiliently deformed radially outwardly by the ball to obstruct a flow passage.

A preferred flow controller embodies more than one and preferably all of the aspects of the invention. Thus there may be balls of different weights, which are, hard, so as to be substantially incompressible in use, and which have different flow passages past them.

The longitudinal extent of the chamber may be variable, preferably by displacement of an inlet end portion. This is preferable to use of a displaceable

-5-

outlet end portion, since firstly the pressure differential tending to cause leakage is much less, and secondly any material that does leak in is still subjected to passage through the flow controller.

A preferred embodiment of the invention will now be described in greater detail with reference to the accompanying drawings in which:

Fig. 1 is an axial section through a flow controller for a pulsating air supply to the manifold of an internal combustion engine; and

Fig. 2 is a plan view from above of the centre plate of the controller shown in Fig. 1.

The illustrated flow controller 10 has a metal housing 12 within which is defined an elongate chamber 14. The chamber 14 has inlet and outlet portions 16,18 of equal diameter, and an intermediate portion 20 of reduced diameter. The transitions between the portions are bevelled surfaces 22 in the wall of the housing 12.

The housing 12 extends above the inlet portion 16, and at its upper end region is provided with an internally threaded collar 24. A stem element 26 is threadedly engaged in the collar 24 so that it can be screwed into the housing 12 to a variable extent. The stem element 26 has an axial bore 28 to serve as an air inlet into the chamber 14. In its lower axial end face there is a cavity 29 which houses an O-ring 30 of resilient material. The O-ring 30 is retained in place by an in-turned lip 32 at the mouth of the cavity 29.

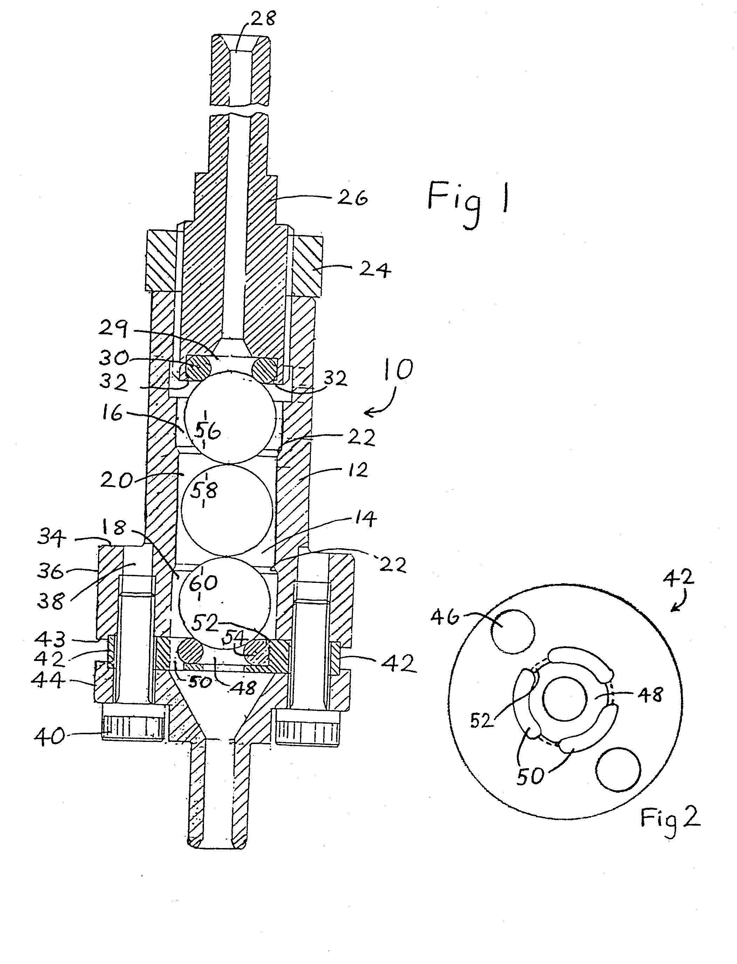

At the lower, outlet end of the housing 12, the outer wall has an outwardly extending step 34 leading to a mounting portion 36 of greater diameter. This is penetrated by a number of apertures 38 parallel to the axis, for receiving mounting bolts 40. The bottom end face of the mounting portion 36 is generally planar, but with an axially upstanding rim 43 around the perimeter. A centre plate 42, which is shown in more detail in Fig. 2, is flush with the end face of the mounting portion 36, within the rim 43. An outlet nozzle portion 44 is fitted beneath the centre plate 42. The bolts 40 pass through the nozzle portion 44 and the centre plate (through apertures 46), so that the centre plate 42 is sandwiched and held firmly in place.

The centre plate 42 is circular in plan. Its outer portion is relatively thick, and it is thinned by a generally cylindrical central cavity 48 which extends from above. At the margin of the cavity 48, the plate 42 is penetrated by through-holes 50, arranged in a circle. In the illustrated embodiment, there are three holes 50, each one being arcuate and extending over about 80°. The wall of the central cavity 48 between the holes 50 has a flange 52 which extends radially inwardly. As can be seen from Fig. 1, an O-ring 54 seats within the central cavity 48, being retained by the flange 52. In the absence of an applied force, the O-ring 54 overhangs the holes 50 to a small extent.

Within the chamber 14, there are three balls 56,58, 60. The lowermost (outlet end) ball 60 can seat on the O-ring 54 as seen in Fig. 1, so that downward force on the ball 60 transmits to the ring 54 a force having a radially outward component, tending to deform the ring 54 so as to cover a greater proportion of the holes 50. The upper (inlet end) ball 56 can abut the upper O-ring 30 in a similar manner, but this ring is not arranged to expand outwardly. The three balls 56,58,60 are generally within respective ones of the three portions 16,20,18 of the chamber 14. Thus the central ball 58 is generally within the intermediate portion 20 of reduced diameter. All the balls are of the same size, but the middle ball 58 is lighter than the two outer balls (which are of equal weight).

In use, the flow controller 10 is coupled to an injector. This is preferably as close as possible to the underside of the butterfly valve in the carburettor on the engine side of the inlet manifold. It is coupled by a pneumatic coupling which extends from the outlet nozzle portion 44. The coupling preferably has the same diameter throughout, so as to minimise damping of the pulsation. For an engine with multiple carburettors, there should be a corresponding number of injectors, but all can be fed from a single flow controller 10.

The vacuum induced in the manifold by the operation of the engine draws air through the flow controller 10. This air passes in through the bore 28 in the stem element 26, through the chamber 14 (via the gaps between the balls 56,58,60 and the wall of the housing 12), and out via the through-holes 50 in the centre plate and the through-passage in the outlet nozzle portion 44. The greater the vacuum in the manifold, the more the balls are pulled downwardly, and hence the greater the force with which the outlet ball 60 is urged against the O-ring 54. Since this force is responsible for deforming the O-ring 54 outwardly to obstruct the holes 50, this automatically reduces the flow passage when the vacuum increases. Thus the amount of air drawn through the flow controller 10 may remain roughly constant. At any rate, its variation with the variation of engine vacuum is much attenuated.

In Fig. 1, the stem element 26 is shown screwed down so that the balls 56,58,60 are held between the two O-rings 30,54. Generally, for use the stem element 26 will be retracted somewhat so that the balls can move up and down in the chamber 14. This creates turbulence in the air stream. Furthermore, since when the ball 56 abuts the O-ring 30 as shown it blocks the air inlet bore 28, the air flow is caused to pulsate. This is believed to be very desirable, for example because the pulsating air flow helps to break up the fuel particles in the engine, thus giving better combustion.

The use of balls of different weights and a flow passage past them of varying size (owing to the reduced diameter of the intermediate portion 20 of the chamber 14)

-9-

is believed to enhance the creation of turbulence and pulsing and thus to improve the utility of the flow controller 10. Without being tied to any theoretical explanation, it is believed that the variation in flow path is effective because it increases the turbulence around the middle ball 58, thus causing it to spin and to vibrate much more strongly. The reduced passageway around the middle ball 58 produces a Venturi effect. This causes the middle ball 58 to vibrate. It tends to vibrate in sympathy with the inlet manifold (which has pulses created by the pistons and valves of the engine). The harmonic on which the ball 58 vibrates depends on the weight differential between the different balls 56,58,60 and the effective length of the chamber 14, which is varied by adjusting the stem element 26 until resonance is achieved. This can be detected quite easily because the vibration of the balls is much increased, and a "singing" can be heard.

In the illustrated embodiment, the housing 12, the centre plate 42 and the outlet nozzle portion 44 are made of aluminium, whereas the threaded collar 44 and the stem element 26 are of steel. The O-rings 30,54 are of nitrile rubber. The internal diameter of the inlet and outlet portions 16,18 of the chamber 14 is about 0.566 inches (about 14.4 mm), while the diameter of the intermediate portion 20 is about 0.531 inches (about 13.5 mm). The balls 56,58,60 are all of 0.5 inch diameter (about 12.7 mm). They are ground to within 0.002 inch tolerance of each other _____

-10-

(about 0.05 mm). Each ball is spherical to within 0.001 inch (about 0.025 mm). The light central ball 58 is made of a polypropene material, and weighs 0.93 g. The outer balls are made of a polyamide, and weigh 1.15 g each. In fact, we have found that acceptable results can be achieved with a light ball weighing as little as 0.90 g (low density polyethene) and heavy balls weighing 1.248 g (polycarbonate). But the weight differential should not be too great: a combination of metal and plastics balls has been found undesirable.

Although it is preferred to have an alternation of ball weights in step with an alternation of flow diameters, with an intermediate light ball with a narrow passage past it as shown, other arrangements may be employed. It is preferred to have a light ball in a narrowed portion, which has been found to give good results. But other arrangements may be used, particularly if the different weights and sizes are carefully chosen.

In use, the top ball 56 interacts with the O-ring 30 to produce pulsation by intermittently sealing the air passageway. The sealing is much aided by using a hard ball 56 rather than a compressible one. The bottom ball 60 interacts with the O-ring 54 to regulate the flow rate. It may remain in contact with the O-ring 54 for all or much of the time.

-11-

In use, a practical embodiment of the exemplified controller 10 was found to pass 20-40 standard cubic feet (ca 550-1150 l) of air per hour at an engine vacuum of 40-55 cm Hg.  This is only about 0.5% of the air demand of the engine.  However this small amount of air has a marked effect when pulsated by means of the controller 10.  With the balls (or at least the top one) oscillating at about 2800 hz, it seems that the surface tension of the fuel droplets in the carburettor was broken down, to produce a much finer mist, leading to better combustion.  At any rate, the effect was to increase the engine's idling speed, so that the idling jets required adjustment, and to reduce the carbon monoxide emission from the range 2.5-3.5% to less than 0.5%, and the hydrocarbon particulate emission from around 400 p.p.m. to around 200 p.p.m..

Of course, the illustrated embodiment is given by way of example only, and much variation is possible.  In one minor modification, the mounting portion 36 has a cylindrical wall extending downwardly to define a cup. This wall has an internal thread, and the nozzle portion 44 has a complementary external thread.  The centre plate 42 fits inside the cup, and the assembly is screwed together without the need for bolts 40.  The upper end may be formed without a separate collar 24.  In a preferred form, the stem 26 must be fed in from the bottom.  Then when the plate 42 and nozzle portion 44

-12-

are fitted, the whole assembly can be sealed by sealing at the bottom, e.g. by bulging a portion of the cup wall inwardly.

It is desirable to provide an air filter for the air entering the controller 10, to protect both the controller and the engine. For example, the stem element 26 can be provided with a sintered metal filter.

While the invention has been illustrated above by reference to a preferred embodiment, it will be understood by those skilled in the art that various changes may be made without departing from the spirit and scope of the invention, and it is intended to cover all such changes and modifications by the appended claims.

CLAIMS:

1. A flow controller (10) comprising a housing (12) defining an elongate chamber (14) with an inlet and outlet at respective end regions (16,18); and a plurality of balls (56,58,60) arranged generally longitudinally within the chamber (14), the chamber and balls being dimensioned and arranged so as to permit longitudinal flow through the chamber from the inlet to the outlet; characterised in that the balls (56,58,60) are hard, and at least a first ball (58) is of a substantially different weight from at least a second ball (56,60).

2. A flow controller according to claim 1 wherein said balls include a relatively heavy ball (56) on the inlet side of a relatively light ball (58).

3. A flow controller according to claim 1 wherein there are three balls (56,58,60) of alternating weight, in the sequence heavy/light/heavy.

4. A flow controller according to any preceding claim wherein the dimensions of the balls (56,58,60) and the chamber (14) are mutually adapted so that the flow passages past two successive balls are of different sizes.

5. A flow controller according to claim 4 wherein the chamber (14) has portions (16,20,18) of different cross-sectional area for housing respective balls (56,58,60).

6. A flow controller according to claim 5 wherein there are three said balls (56,58,60) and the chamber

-14-

(14) has a narrow central portion (20) for housing a central ball (58), and wider inlet (16) and outlet (18) portions for housing inner (56) and outer (58) balls.

7.    A flow controller according to any preceding claim wherein at the outlet end region of the chamber (14) there is provided a flow restricting means (42,54); and the adjacent ball (60) is arranged to be urged by flow through the housing (14) to actuate the flow restricting means (42,54).

8.    A flow controller according to claim 7 wherein the flow restricting means comprises a resilient element (54) and means (42) defining a flow passage (50) past it, the urging of said ball tending to deform the element (54) thereby to restrict the flow passage (50) to an extent dependent on the force applied by the ball (60).

9.    A flow controller according to claim 8 wherein the resilient element is an O-ring (54).

10.    A flow controller according to any preceding claim wherein said housing (12) has an inlet end portion (26) which is displaceable to vary the length of the chamber (14).

11.    A flow controller according to any preceding claim including a resilient O-ring in the housing at the inlet end of the chamber (30), arranged so that the adjacent ball (56) can seat on it to restrain flow through the chamber (14).

1/1

0125121

28

Fig 1

26

24

29
30
32
32
16
56
10
22
20
58
12
14
34
18
36
60
38
52
54
22
43
42
50
48
44
42
40

42

46

48

52

50

Fig 2